# EUROPEAN PATENT APPLICATION

(11) **EP 1 659 833 A1**
(43) Date of publication of application: **24.05.2006**
(21) Application number: 05110711.8
(22) Date of filing: 14.11.2005
(51) Int. Cl.: H05B 37/02

(54) **Remote-controlled diverter switch for electric plants**

(30) Priority: 18.11.2004 IT MI20042217
(71) Applicant: BTICINO S.P.A., 20154 Milano (IT)
(72) Inventor: Santini, Ernesto, 28060 Sozzago (Novara) (IT)
(74) Representative: Coppo, Alessandro

(57) **Abstract**

A description follows of a remote-controlled diverter switch (10) for electric plants, suitable for substituting a traditional diverter switch of an electric plant, for allowing an electric charge (13) already driven by several diverter switches (12) or inverters (11) of the known type, to be piloted by remote-control; the remote-controlled diverter switch (10) comprises a feeding circuit (16), at least one current sensor (14) or voltage sensor (18) and an electronic control panel (15) of the charging state (on or off) (13), so as to be able to exert commands of a general nature thus enabling it to be inserted in an automation system.

## Description

The present invention relates to a remote-controlled diverter switch for electric plants.

More specifically, the invention relates to a built-in actuating device, which operates, via remote-control, as a diverter switch of an electric plant.

The diverter switch is generally used for the switching on or off of lamps or other electrically charged devices, which represent the load (normally of the resistive type, but not only) of the electric plant.

In currently existing electric plants, the switches and/or diverter switches are generally connected with the load, as one or more light sources, by means of electric conductors. The use of these switches and diverter switches therefore requires a massive use of copper conductors for the wiring of the whole electric plant; this wiring must therefore be effected by persons specialized in the laying of wires inside the walls of a building.

Furthermore, the ever-increasing use of built-in switches and/or diverter switches creates considerable drawbacks due to the necessity of having to effect maintenance and/or repair operations to the device or restructuring interventions of the apartment or building in which these devices are installed.

One of the objectives of the present invention is therefore to overcome the above drawbacks and, in particular, to indicate a remote-controlled diverter switch for electric plants, which allows a load already controlled by several traditional diverter switches or inverters, to be piloted by means of remote-control.

Another objective of the present invention is to provide a remote-controlled diverter switch for electric plants which allows the load to be piloted both by remote-control and with traditional switches, by means of normal wires.

A further objective of the invention is to indicate a remote-controlled diverter switch for electric plants which is simple to install and use, suitable for drastically reducing the installation costs of electric plants, with respect to the known art, as well as being efficient, functional, safe and reliable.

These and other objectives, according to the present invention, are achieved by providing a remote-controlled diverter switch for electric plants, according to claim 1 enclosed.

Other detailed technical characteristics are contained in the subsequent claims.

The remote-controlled diverter switch for electric plants, object of the present invention, advantageously consists, in practice, of a built-in remote actuator which acts as a diverter switch and can have the same design and the same dimensions as a normal built-in switch, such as those commonly used in buildings, for household and/or industrial use.

Further characteristics and advantages of a remote-controlled diverter switch for electric plants, according to the present invention, will appear more evident from the following illustrative and nonlimiting description, referring to the enclosed figures, in which:
- figure 1 shows a first schematic circuital configuration relating to the use of the remote-controlled diverter switch for electric plants, according to the present invention;
- figure 2 schematically shows an alternative circuital configuration to that of figure 1, according to the invention.

First of all, it should be noted that, even if specific reference is made in the following description to the piloting of a strictly resistive load, such as that of a bulb or light source in general, the invention can be extended to any load which can be controlled by various diverter switches or inverters of the traditional type.

With reference to the above figures, 10 indicates a built-in remote actuator acting as a remote-controlled diverter switch, according to the present invention, 11 indicates an inverter of the traditional type of the electric plant, 12 indicates a diverter switch of the traditional type of the electric plant, whereas 13 indicates a general load and, in particular, a resistive load, such as a bulb or light source in general, of the electric plant, connected, in correspondence with one of the poles, to the neutral wire N1, and optionally further connected to the electric line wire L1 or L2 (depending on the position of the traditional diverter switch 12), at the outlet of the remote-controlled switch 10.

The neutral wire N2 and the electric line wire L (electric feeding system at 230 Volts), are also attached to the inlet of the remote-controlled diverter switch 10.

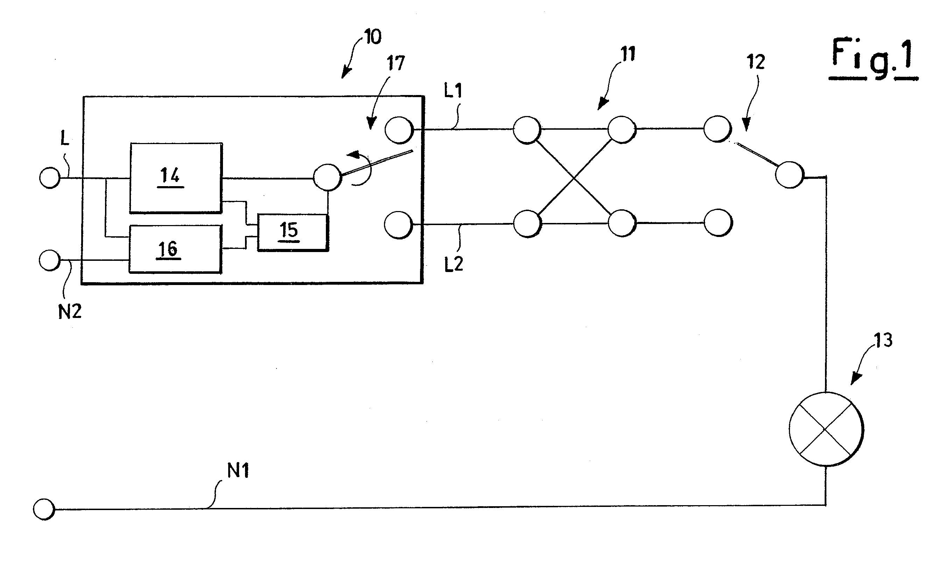

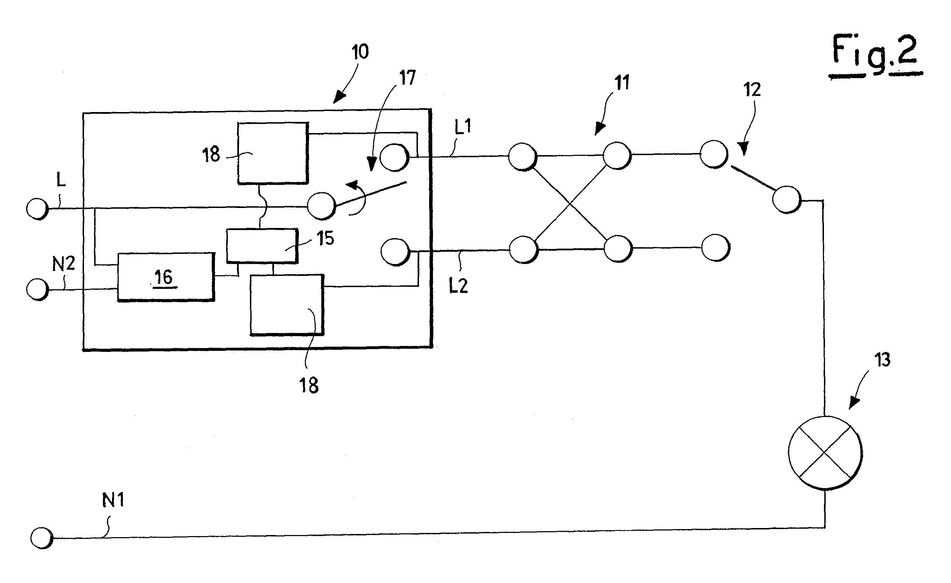

The remote-controlled diverter switch 10 also comprises at least one current sensor device 14 (according to the scheme of figure 1) or voltage sensor device 18 (according to the scheme of figure 2), an electronic control panel 15, a feeding circuit 16 and an electric or electronic diverter switch, of the mechanical type, generically indicated with 17 in figure 1, suitable for appropriately commuting the electric contact on the electric wires L1 or L2.

In practice, the remote-controlled diverter switch 10 can simply substitute a diverter switch of the traditional type of the electric plant, so that the load 13 of said plant, already controlled by various traditional diverter switches 12 and/or inverters 11, can be piloted by remote-control.

It is in fact sufficient to substitute only one traditional diverter switch of the electric plant with the new remote-controlled diverter switch 10 and maintain all the other traditional inverters 11 and diverter switches 12, already present in the electric plant, to allow the load 13 to be piloted, both with remote-control commands and with commands of the traditional type.

As already mentioned, the remote-controlled diverter switch 10 also comprises at least one current sensor 14 or voltage sensor 18, which is capable of revealing whether the load 13 is switched on or off, so that the above remote-controlled diverter switch 10 always has the charging state 13 under control and, by means of the control panel 15, can effect general commands allowing it to be inserted in any automation system.

Finally, an off-on load signaling can be displayed directly on the front mask of the remote-controlled diverter switch 10, by means of a suitable LED diode.

The characteristics, as also the advantages, of the remote-controlled diverter switch for electric plants, which is object of the present invention, appear evident from the above description.

Finally, numerous variants can obviously be applied to the remote-controlled diverter switch in question, all included in the novelty principles inherent in the inventive idea. It is also evident that in the practical embodiment of the invention, the materials, forms and dimensions of the details illustrated can vary according to the demands and can be substituted with other technically equivalent alternatives.

## Claims

1. A remote-controlled diverter switch (10) for electric plants, suitable for substituting at least a first switch and/or at least a first diverter switch of an electric plant, for allowing an electric charge (13) already driven by one or more second diverter switches (12) and/or one or more second inverters (11), to be piloted by remote-control, **characterized in that** said remote-controlled diverter switch (10) comprises a feeding circuit (16), at least one current sensor (14) or voltage sensor (18) and an electronic control panel (15) of the charging state (13).

2. The remote-controlled diverter switch (10) according to claim 1, **characterized in that** it consists of a built-in remote actuator which acts as a diverter switch.

3. The remote-controlled diverter switch (10) according to claim 1, **characterized in that** said remote-controlled diverter switch (10) has at least two electric wires (L1, L2) at the outlet, to which said second inverters (11) and/or said second diverter switches (12) are attached.

4. The remote-controlled diverter switch (10) according to claim 3, **characterized in that** said electronic control panel (15), fed by said feeding circuit (16), controls at least one switch and/or diverter switch (17), suitable for commuting between said two electric wires (L1, L2).

5. The remote-controlled diverter switch (10) according to claim 1, **characterized in that** said remote-controlled diverter switch (10) can substitute a switch and/or diverter switch of the electric plant, in order to allow said charge (13) of the electric plant, already controlled by said second diverter switches (12) and/or by second inverters (11), to be piloted by means of remote-control.

6. The remote-controlled diverter switch (10) according to claim 1, **characterized in that** said charge (13) can be piloted both with remote-control and with traditional commands.

7. The remote-controlled diverter switch (10) according to claim 1, **characterized in that** said current sensor (14) or voltage sensor (18) is capable of revealing whether the charge (13) is on or off, so that said remote-controlled diverter switch (10) always has the charging state (13) under control and, by means of said electronic control panel (15), can effect general commands so as to be able to be inserted in any automation system.

8. The remote-controlled diverter switch (10) according to claim 1, **characterized in that** it comprises at least one display device, such as an LED diode, for an on-off charge (13) signaling.
